# EUROPÄISCHE PATENTSCHRIFT

(11) **EP 1 479 150 B1**
(45) Veröffentlichungstag und Bekanntmachung des Hinweises auf die Patenterteilung: **01.06.2005**
(21) Anmeldenummer: 03708052.0
(22) Anmeldetag: 09.01.2003
(51) Int. Cl.: H02H 11/00, H02J 1/14

(54) **VERFAHREN UND VORRICHTUNG ZUR REDUZIERUNG VON STROMSPITZEN IN KRAFTFAHRZEUGBORDNETZEN**
METHOD AND DEVICE FOR REDUCING PEAK LOADS IN MOTOR VEHICLE SUPPLY SYSTEMS
PROCEDE ET DISPOSITIF POUR REDUIRE LES CHARGES DE POINTE DANS DES RESEAUX DE BORD D'AUTOMOBILES

(30) Priorität: 20.02.2002 DE 10207899
(43) Veröffentlichungstag der Anmeldung: 24.11.2004
(73) Patentinhaber: Volkswagen AG, 38436 Wolfsburg (DE)
(72) Erfinder: BURNUS, Oliver, 29393 Gross Oesingen (DE); BOCK, Thomas, 38118 Braunschweig (DE)
(74) Vertreter: Effert, Bressel und Kollegen
(86) Internationale Anmeldenummer: PCT/EP2003/000157
(87) Internationale Veröffentlichungsnummer: WO 2003/071650

(56) Entgegenhaltungen:
- DE-A- 4 339 016
- US-A- 4 890 212

## Beschreibung

Die Erfindung betrifft ein Verfahren und eine Vorrichtung zur Reduzierung von Stromspitzen in Kraftfahrzeugbordnetzen mit mindestens zwei Hochstromverbrauchern.

Durch die zunehmende Anzahl von elektrischen Verbrauchern wird das Kraftfahrzeugbordnetz immer stärker belastet. Daher sind bereits verschiedene Vorrichtungen zur Lösung dieses Problems entwickelt worden. Beispielsweise ist es bekannt, dass ein Bordnetzmanagement-Steuergerät den Bordnetzzustand durch eine Spannungsmessung auswertet und bei Erkennung eines kritischen Bordnetzzustandes Komfortverbraucher nach einer festgelegten Prioritätsliste abschaltet. Des Weiteren ist es bekannt, in bestimmten Phasen zur besseren Ladung der Batterie die Leerlaufdrehzahl zu erhöhen. Insbesondere jedoch belasten Hochstromverbraucher das Bordnetz temporär sehr stark. Daher ist es auch bekannt, vor dem Schalten eines Hochstromverbrauchers den Bordnetzzustand zu überprüfen und bei einer sich abzeichnenden kritischen Bordnetzlage prophylaktisch Komfortverbraucher abzuschalten. Beispiele für derartige Hochstromverbraucher sind Servolenkungen, elektrische Fensterheber oder eine Streuscheibenreinigungsvorrichtung. Insbesondere bei Vorhandensein mehrerer elektrischer Hochstromverbraucher, wie beispielsweise vier elektrischen Fensterhebem, wird ein Bordnetzmanagement der zuvor beschriebenen Art recht aufwendig.

Aus der US-A-4 890 212 ist ein Verfahren und eine Vorrichtung zur Reduzierung von Stromspitzen in einem mehrere Hochstromverbraucher aufweisenden elektrischen Gerät bekannt. Das Gerät umfasst unter anderem einen Hauptmotor und einen Spiegel-Motor, deren Strom-Zeit Kurven bekannt sind. Anhand von Zustandsdaten, die die Motorendrehzahl, der Stromverbrauch oder die Zeitspanne seit dem Einschalten des Motors sein können, ist der Strombedarf des jeweiligen Motors deshalb extrapolierbar. Mittels eines einem ersten Hochstromverbraucher zugeordneten Steuergeräts ist der Strombedarf des anderen Hochstromverbrauchers abrufbar, und ein Betätigungssignal für den ersten Hochstromverbraucher wird verzögert, falls für den anderen Hochstromverbraucher ein hoher Strombedarf aktuell vorliegt. Ein bevorzugtes Anwendungsgebiet des Gerätes ist der Einsatz in Kopierern und Druckern.

Aus der DE 43 39 016 A1 ist ein Verfahren zum Betrieb eines Netzteiles zur Versorgung einer elektronischen Steuerung mit mehreren elektrischen Verbrauchern, wie elektromagnetische Aktoren, Relais oder Elektromotoren, bekannt, deren Einschaltstrom erheblich über deren normalen Betriebsstrom liegt, wobei nach dem Einschalten eines Verbrauchers ein weiterer erst nach dem Absinken des Stromes des zuvor eingeschalteten Verbrauchers auf dessen Betriebsstrom eingeschaltet wird.

Der Erfindung liegt daher das technische Problem zugrunde, ein Verfahren und eine Vorrichtung zur Reduzierung von Stromspitzen in Kraftfahrzeugbordnetzen mit mindestens zwei Hochstromverbrauchem zu schaffen, die mit einfachen Mitteln starke Bordnetzbelastungen reduziert.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu wird aus den Zustandsdaten der Hochstromverbraucher ein Strombedarf extrapoliert, wobei mittels eines einem Hochstromverbrauchers zugeordneten Steuergerät der Strombedarf der anderen Hochstromverbraucher abrufbar ist, wobei ein Betätigungssignal für den Hochstromverbraucher verzögert wird, falls für einen der anderen Hochstromverbraucher ein hoher Strombedarf erwartet wird oder aktuell vorliegt. Hierdurch ist ein zentrales Bordnetzmanagement nicht notwendig, sondern die Hochstromverbraucher selbst passen ihren Strombedarf an. Dabei wird ausgenutzt, dass die Schaltcharakteristiken der meisten Hochstromverbraucher bekannt sind, so dass anhand der Zustandsdaten und der bekannten Schaltcharakteristik der Strombedarf extrapoliert werden kann. Befindet sich daher ein anderer Hochstromverbraucher kurz vor einer Hochstromphase bzw. bereits in einer Hochstromphase, so wird die Ansteuerung eines anderen Hochstromverbrauchers verzögert. Aufgrund der Berücksichtigung der Zeit vor der Hochstromphase, kann die Vorrichtung rechtzeitig bereits die Maßnahmen zur Reduzierung der Stromspitzen durchführen.

In einer bevorzugten Ausführungsform teilt jeder Hochstromverbraucher einen zukünftig absehbaren bzw. aktuell vorliegenden Hochstrombedarf den anderen Hochstromverbrauchern mit, wobei die Reihenfolge der Durchführung verschiedener Betätigungssignale in der Reihenfolge der Hochstrombedarfsmitteilungen erfolgt.

In einer weiteren bevorzugten Ausführungsform sind die Hochstromverbraucher als elektrische Fensterheber und/oder elektrische Streuscheibenreinigungsvorrichtung ausgebildet. Diese stellen im Wesentlichen Komfortkomponenten dar, bei denen die Verzögerung des Betätigungssignals unkritisch ist.

In einer weiteren bevorzugten Ausführungsform ist mehreren Hochstromverbrauchern ein gemeinsames Steuergerät zugeordnet. Der Vorteil ist, dass somit in einem einzigen Steuergerät bereits alle Anforderungen und Zustandsdaten vorhanden sind.

Alternativ kann auch jedem Hochstromverbraucher ein eigenes Steuergerät zugeordnet sein, wobei dann die Steuergeräte über ein Bussystem miteinander verbunden sind und die Daten austauschen.

Die Erfindung wird nachfolgend anhand eines bevorzugten Ausführungsbeispiels näher erläutert. Die Fig. zeigen:
- Fig. 1: ein schematisches Blockschaltbild einer Vorrichtung zur Reduzierung von Stromspitzen für elektrische Fensterheber und
- Fig. 2: eine schematische Schaltcharakteristik eines elektrischen Fensterhebers beim Hoch- und Runterfahren.

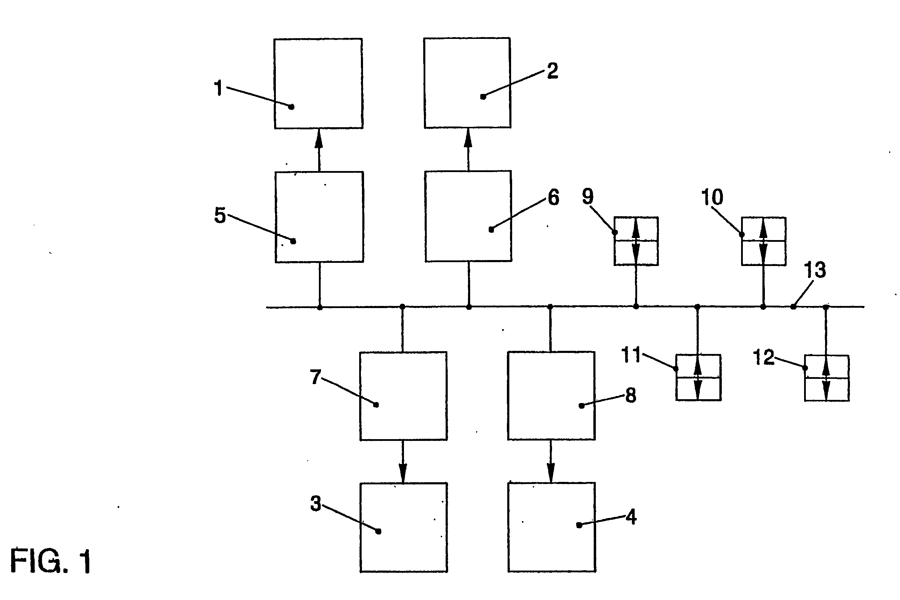

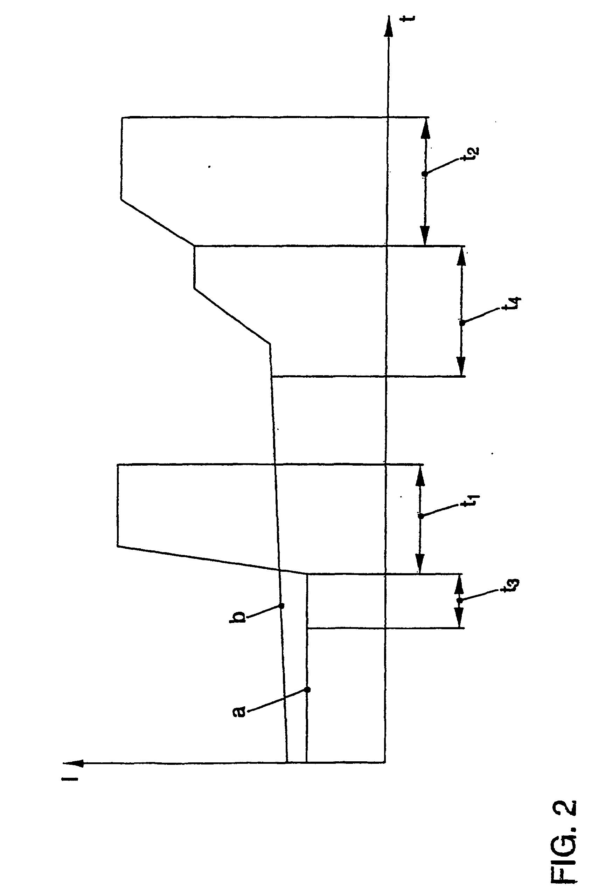

In der Fig. 1 ist ein schematisches Blockschaltbild einer Vorrichtung zur Reduzierung von Stromspitzen für elektrische Fensterheber 1-4 dargestellt, denen jeweils ein Steuergerät 5-8 zugeordnet ist. Des weiteren ist jedem elektrischen Fensterheber 1-4 ein Bedienelement 9-12 zugeordnet, das vorzugsweise als Wippschalter ausgebildet ist. Die Bedienelemente 9-12 und die Steuergeräte 5-8 sind über mindestens ein Bussystem 13 miteinander verbunden. Die Fensterheber 1-4 können mit den Steuergeräten 5-8 direkt verbunden sein, wie in Fig. 1 dargestellt oder aber über das Bussystem 13 verbunden sein. Ein über ein Bedienelement 9-12 eingegebenes Betätigungssignal wird dann über das Bussystem 13 an das zugehörige Steuergerät 5-8 übertragen, wo dann ein Stellsignal für den zugeordneten elektrischen Fensterheber 1-4 generiert wird. Bevor nun die Wirkungsweise der Stromspitzenreduzierung näher erläutert wird, soll zunächst die Schaltcharakteristik der elektrischen Fensterheber anhand Fig. 2 näher erläutert werden.

Der Verlauf a) stellt die Schaltcharakteristik für den Abwärtsverlauf eines elektrischen Fensterhebers und der Verlauf b) stellt die Schaltcharakteristik für den Aufwärtsverlauf eines elektrischen Fensterhebers dar. Beim Abwärtsverlauf zieht der elektrische Fensterheber zunächst einen nahezu konstanten Strom, der dann steil ansteigt, wenn der elektrische Fensterheber den unteren Anschlag erreicht. Diese Stromspitze kann bis zu 30 A betragen. Ähnlich sieht der Verlauf für die Aufwärtsbewegung aus, wobei dort noch ein zusätzliches Plateau auftritt. Auch dort steigt der Strom am oberen Anschlag stark an. Die beiden Zeiträume t₁ bzw. t₂ stellen die Hochstromphase dar. Bei gleichzeitiger Ansteuerung von mehr als einem Fensterheber in der Hochstromphase kann es aufgrund der kurzzeitigen Stromspitzen zu Spannungseinbrüchen kommen, die insbesondere dann auftreten, wenn die Batterie stark entladen oder defekt ist bzw. die Generator-Batterie-Ladeleitung defekt ist. Diese Spannungseinbrüche können wiederum zu Fehlfunktionen bzw. Kurzausfällen an anderen sicherheitsrelevanten elektrischen Verbrauchern, wie beispielsweise Steuergeräte, Beleuchtungseinrichtungen oder elektrischen Lenkungen, führen. Allerdings sind moderne elektrische Fensterheber mit einer Messmethodik zur Einklemmerkennung ausgebildet, sodass deren zugeordnetem Steuergerät die Position der Scheibenlage, die Spannung im Bordnetz, der Stromverlauf am elektrischen Fensterheber und die Drehzahl des Motors bekannt ist. Diese Größen stellen Zustandsgrößen dar, aus denen der Stromverlauf extrapoliert werden kann. Somit kann also nach einer Betätigung vorausberechnet werden, wann ein elektrischer Fensterheber in die Hochstromphase t₁ bzw. t₂ je nach Bewegungsrichtung kommt. Somit kann weiter ein Zeitintervall t₃ bzw. t₄ definiert werden, was diesen Hochstromphasen t₁ bzw. t₂ unmittelbar vorangeht. Das Erreichen dieses Zeitintervalls t₃ bzw. t₄ meldet jedes Steuergerät 5-8 den jeweils anderen Steuergeräten. Diese wissen somit, dass der meldende elektrische Fensterheber in naher Zukunft einen Spitzenstrom benötigt. Erhält nun ein anderer elektrischer Fensterheber ein Betätigungssignal von seinem zugeordneten Bedienelement, so wird dieses Betätigungssignal nur bis zum Erreichen des eigenen Zeitintervalls t₃ bzw. t₄ durchgeführt. Alternativ kann vorgesehen sein, dass die Betätigung sofort verzögert wird, also erst durchgeführt wird, wenn die Hochstromphase des anderen elektrischen Fensterhebers beendet ist. Tritt der Fall ein, dass an mehreren elektrischen Fensterhebern während des Laufs das Zeitintervall t₃ bzw. t₄ erreicht wird, so läuft nur der elektrische Fensterheber weiter, der als erster das Erreichen gemeldet hat, wohingegen die anderen stoppen bzw. bis zum Erreichen ihres Intervalls t₃ bzw. t₄ weiterfahren. Nach Beendigung der Hochstromphase teilt der erste elektrische Fensterheber dies den anderen mit, die dann weiterlaufen, bis der nächste sein Intervall t₃ bzw. t₄ erreicht hat bzw. die elektrischen Fensterheber werden in der Reihenfolge des Erreichens ihres intervalls t₃ bzw. t₄ nacheinander bewegt Die erste Variante hat den Vorteil, dass das Bordnetz nicht stark belastet wird, wohingegen die zweite Variante den Vorteil hat, dass die Verzögerung durch den Nutzer kaum wahrnehmbar ist, da die elektrischen Fensterheber bis direkt an den Anschlag fahren. Ein ansatzweise gleichen Effekt kann man dadurch erreichen, dass die intervalle t₃ bzw. t₄ nicht zu groß gewählt werden.

## Patentansprüche

1. Vorrichtung zur Reduzierung von Stromspitzen in Kraftfahrzeugbordnetzen, umfassend mindestens zwei Hochstromverbraucher, aus deren Zustandsdaten ein Strombedarf extrapolierbar ist, mindestens ein Mittel zum Definieren eines ersten Zeitintervalls (t3, t4) in der Schaltcharakteristik der Hochstromverbraucher, das einer Hochstromphase (t1, t2) vorangeht und mindestens ein Mittel zum Erfassen mindestens einer Zustandsgröße, aus der ein Erreichen des ersten Zeitintervalls (t3, t4) für jeden Hochstromverbraucher ableitbar ist, wobei mittels eines einem Hochstromverbraucher zugeordneten Steuergerätes (5-8) der Strombedarf der anderen Hochstromverbraucher abrufbar ist, wobei ein Betätigungssignal für den Hochstromverbraucher verzögert wird, falls für einen der anderen Hochstromverbraucher ein hoher Strombedarf erwartet wird oder aktuell vorliegt.

2. Vorrichtung nach Anspruch 1, **dadurch gekennzeichnet, dass** jeder Hochstromverbraucher einen zukünftig absehbaren bzw. aktuell vorliegenden Hochstrombedarf den anderen Hochstromverbrauchern mitteilt, wobei die Reihenfolge der Durchführung verschiedener Betätigungssignale in der Reihenfolge der Hochstrombedarfsmitteilungen erfolgt.

3. Vorrichtung nach Anspruch 1 oder 2, **dadurch gekennzeichnet, dass** die Hochstromverbraucher als elektrische Fensterheber (1-4) und/oder elektrische Streuscheibenreinigungsvorrichtung ausgebildet sind.

4. Vorrichtung nach einem der vorangegangenen Ansprüche, **dadurch gekennzeichnet, dass** mehreren Hochstromverbrauchern ein gemeinsames Steuergerät zugeordnet ist.

5. Vorrichtung nach einem der Ansprüche 1 bis 3, **dadurch gekennzeichnet, dass** jedem Hochstromverbraucher ein Steuergerät (5-8) zugeordnet ist, die über ein Bussystem (13) miteinander verbunden sind.

6. Verfahren zur Reduzierung von Stromspitzen in Kraftfahrzeugen mit mindestens zwei Hochstromverbrauchern, wobei aus den Zustandsdaten der Hochstromverbraucher ein Strombedarf extrapolierbar ist, umfassend folgende Verfahrensschritte:
a) Definieren eines ersten Zeitintervalls (t₃, t₄) in der Schaltcharakteristik der Hochstromverbraucher, das einer Hochstromphase (t₁, t₂) vorangeht,
b) Erfassen mindestens einer Zustandsgröße, aus der ein Erreichen des ersten Zeitintervalls (t₃, t₄) für jeden Hochstromverbraucher ableitbar ist, wobei
c) bei Betätigung eines Hochstromverbrauchers ein diesem zugeordnetes Steuergerät abfragt, ob sich ein anderer Hochstromverbraucher in dem ersten Zeitintervall (t₃, t₄) oder in der Hochstromphase (t₁, t₂) befindet und
d) die Betätigung verzögert wird oder nur bis zum Erreichen des ersten Zeitintervalls (t₃, t₄) durchgeführt wird, solange sich ein anderer Hochstromverbraucher noch im ersten Zeitintervall (t₃, t₄) oder in der Hochstromphase (t₁, t₂) befindet.

7. Verfahren nach Anspruch 6, **dadurch gekennzeichnet, dass** die Reihenfolge der Betätigung der Hochstromverbraucher in der Reihenfolge des Erreichens der ersten Zeitintervalle (t₃, t₄) erfolgt.

## Claims

1. Apparatus for reducing current peaks in on-board motor-vehicle electrical systems, comprising at least two high-current loads from whose state data a current requirement can be extrapolated, at least one means for defining a first time interval (t3, t4) in the switching characteristic of the high-current loads, this first time interval preceding a high-current phase (t1, t2), and at least one means for detecting at least one state variable from which it is possible to determine when the first time interval (t3, t4) is reached for each high-current load, it being possible to call up the current requirement of the other high-current loads by means of a controller (5-8) which is associated with a high-current load, an operating signal for the high-current load being delayed if a high current requirement is expected or currently exists for one of the other high-current loads.

2. Apparatus according to Claim 1, **characterized in that** each high-current load informs the other high-current loads of a high current requirement foreseeable in the future or a currently existing high current requirement, the order in which the various operating signals are carried out following the order of the high current-requirement messages.

3. Apparatus according to Claim 1 or 2, **characterized in that** the high-current loads are in the form of electric window winders (1-4) and/or an electric apparatus for cleaning the headlight lenses.

4. Apparatus according to one of the preceding claims, **characterized in that** a common controller is associated with a plurality of high-current loads.

5. Apparatus according to one of Claims 1 to 3, **characterized in that** a controller (5-8) is associated with each high-current load, these controllers being connected to one another by means of a bus system (13).

6. Method for reducing current peaks in motor vehicles having at least two high-current loads, it being possible to extrapolate a current requirement from the state data of the high-current loads, comprising the following method steps:
a) definition of a first time interval (t₃, t₄) in the switching characteristic of the high-current loads, this time interval preceding a high-current phase (t₁, t₂),
b) detection of at least one state variable from which it is possible to determine when the first time interval (t₃, t₄) is reached for each high-current load, wherein
c) when a high-current load is operated, a controller associated with this high-current load checks whether another high-current load is in the first time interval (t₃, t₄) or in the high-current phase (t₁, t₂), and
d) operation is delayed or is carried out only until the first time interval (t₃, t₄) is reached, for as long as another high-current load remains in the first time interval (t₃, t₄) or in the high-current phase (t₁, t₂).

7. Method according to Claim 6, **characterized in that** the order of operation of the high-current loads follows the order in which the first time intervals (t₃, t₄) are reached.

## Revendications

1. Dispositif pour réduire les pointes de courant dans les réseaux de bords des véhicules automobiles, comprenant au moins deux appareillages à courant fort, des données d'état desquels est extrapolé un besoin en courant, au moins un moyen pour définir un premier intervalle de temps (t₃, t₄) dans la caractéristique de commutation de l'appareillage à courant fort, lequel précède une phase de courant fort (t₁, t₂) et au moins un moyen pour détecter au moins une grandeur d'état de laquelle peut être déduite l'atteinte du premier intervalle de temps (t₃, t₄) pour chaque appareillage à courant fort, le besoin en courant de l'autre appareillage à courant fort pouvant être interrogé au moyen d'un appareil de commande (5-8) associé à l'un des appareillages à courant fort, un signal d'actionnement de l'appareillage à courant fort étant retardé si un besoin en courant supérieur est attendu ou est actuellement présent pour l'autre appareillage à courant fort.

2. Dispositif selon la revendication 1, **caractérisé en ce que** chaque appareillage à courant fort communique à l'autre appareillage à courant fort un besoin en courant fort prévisible dans l'avenir ou actuellement présent, l'ordre d'exécution des différents signaux d'actionnement correspondant à l'ordre de communication des besoins en courant fort.

3. Dispositif selon la revendication 1 ou 2, **caractérisé en ce que** les appareillages à courant fort sont réalisés sous la forme de lève-vitres électriques (1-4) et/ou de dispositifs électriques de lavage des verres diffusants.

4. Dispositif selon l'une des revendications précédentes, **caractérisé en ce qu'**un appareil de commande commun est associé à plusieurs appareillages à courant fort.

5. Dispositif selon l'une des revendications 1 à 3, **caractérisé en ce qu'**un appareil de commande (5-8) relié avec les autres par le biais d'un système de bus (13) est associé à chaque appareillage à courant fort.

6. Procédé pour réduire les pointes de courant dans les véhicules automobiles comprenant au moins deux appareillages à courant fort, un besoin en courant pouvant être extrapolé à partir des données d'état des appareillages à courant fort, comprenant les étapes suivantes :
a) définition d'un premier intervalle de temps (t₃, t₄) dans la caractéristique de commutation des appareillages à courant fort qui précède une phase de courant fort (t₁, t₂),
b) détection d'au moins une grandeur d'état de laquelle peut être déduite l'atteinte du premier intervalle de temps (t₃, t₄) pour chaque appareillage à courant fort,
c) lors de l'actionnement d'un appareillage à courant fort, un appareil de commande qui lui est associé vérifie si un autre appareillage à courant fort se trouve dans le premier intervalle de temps (t₃, t₄) ou dans la phase de courant fort (t₁, t₂) et
d) l'actionnement est retardé ou n'est effectué que jusqu'à ce que le premier intervalle de temps (t₃, t₄) soit atteint tant qu'un autre appareillage à courant fort se trouve encore dans le premier intervalle de temps (t₃, t₄) ou dans la phase de courant fort (t₁, t₂).

7. Procédé selon la revendication 6, **caractérisé en ce que** l'ordre d'actionnement des appareillages à courant fort correspond à l'ordre dans lequel le premier intervalle de temps (t₃, t₄) est atteint.
